Europäisches Patentamt

European Patent Office

Office européen des brevets

(11) Publication number: **0 275 897**

A2

# (12) EUROPEAN PATENT APPLICATION

(21) Application number: **88100299.2**

(22) Date of filing: **12.01.88**

(51) Int. Cl.⁴: **B29C 55/22** , H01M 4/76 ,
//B29L31:34,B29L31:60,
B29K67:00

(30) Priority: **21.01.87 IT 1912287**

(43) Date of publication of application:
**27.07.88 Bulletin 88/30**

(84) Designated Contracting States:
**AT BE CH ES FR GB GR LI LU NL SE**

(71) Applicant: **ACCUMULATORI INDUSTRIALI
FIAMM S.p.A.**
**via Dovaro, 8**
**I-36045 Almisano-Lonigo (Vicenza)(IT)**

(72) Inventor: **Vezzaro, Antonio**
**via Circonvallazione, 37**
**I-36075 Montecchio Maggiore Vicenza(IT)**

(74) Representative: **Lecce, Giovanni**
**Dott. Giovanni Lecce & C. S.r.l. Via G. Negri
10**
**I-20123 Milano(IT)**

(54) **Procedure for the thermoforming of multitubular sheaths made of polyester fiber fabrics.**

(57) The present invention refers to a procedure for the thermoforming of multitubular sheaths for positive plates of electric lead accumulators, made of polyester fiber fabrics.

More in particular, the present invention refers to a procedure for the thermoforming of multitubular sheaths made of non-wovens of stayle fibres of polyester already thermically retracted and blocked at points.

*Fig.1*

EP 0 275 897 A2

# PROCEDURE FOR THE THERMOFORMING OF MULTITUBULAR SHEATHS MADE OF POLYESTER FIBER FABRICS.

As noted, the positive plates of lead accumulators for industrial batteries are mainly constructed with the system of plates with small tubes. These mainly consist of a grid in suitable alloy, formed by a top bar, from which many cores or leads of prevalently circular section depart. Around these cores or leads is tamped the positive active material, which accepts the usual load and restores the discharge current determined by the electro-chemical reaction between active material and electrolyte.

As noted, the active material must have some basic characteristics, e.g. remaining coherent, to be able to have the maximum exchange surface between its peroxide and the sulphuric acid of the electrolyte, and, at the same time, maintain the best contact with the lead or metal pins. From the point of view of ionic exchange, it is interesting that the mass is very porous and of a particular porosity, encouraging the speed of downflow or reflux of the acid exhausted in discharge or reformed in load. To maintain porosity, are required both a control or filter to prevent losses, and a compression to maintain the cohesion and adhesion of the mass to the leads.

Furthermore, since the active material undergoes cyclic variations of specific volume, an elastic coaction of the limiting system must be guaranteed, without risks of fragility or breakage.

After long experience in the field of industrial batteries, it has been found that the best system of porous limitation is that composed of an external tube, preferably cylindrical, for the single or elliptic for the double pin, which presses and supports the positive active material.

Industrially that has always been obtained with the electro-chemical transformation of lead oxide powders of various formulae, tamped by vibrations around the pins inside the porous container or small tube, through its top opening, which, after filling, is blocked with a base, coupled to the head of the pin and to the side of the porous container or small tube.

The name of small tube and plate with small tubes, as used in common language, derives from the fact that, at the start of industrial production, the containers were of continuous ebonite tubes, sawn at very short intervals for better access of the acid. These small tubes were often not very porous, difficult to produce and easily cracked.

A rapid attempt was therefore made to replace them with small tubes, again single, of fibreglass, locked together by resins.

Moreover, to maintain the required round or square shape, the fibres were soaked with resins which polymerized irreversibly among the fibres to obtain a blocked shape of the wall.

According to the process described in English patent No. 1.053.747, a small continuous tube of resinated fiberglass, fitted on a core, is submitted to polymerization in polymerizing furnaces then cut to size.

This obtains a very porous tube, with little thrust resistance, single and therefore discoordinated from the adjoining tubes, in processing and use.

The use of synethetic yarns, resistant to solutions of sulphuric acid and to anodix oxication, permits the preparation of small textile tubes, kept in shape either by reticulation of the polymer forming the yarn, as in the case of PVC and modified PVC yarns (commercially called dynel) or by suitable dressings, when the fibers, like those of polyester, do not alone give geometrically stable structures. The self-supporting tubes of PVC and modified PVC have an excellent porosity, an excellent elasticity, a lower resistance to oxidation, but have the drawback of yielding small quantities of chlorine, very harmful to the plates. For this, at present, polyester yarns are most exclusively used, which, as mentioned above, must be dressed.

Furthermore, the textile technique has made it possible to obtain double layers of fabrics with parallel tubes, which make it possible to obtain simultaneously a desired multiple number of small tubes (e.g. 19 or 15).

As noted, all synthetic fibres submitted to a temperature at least equal that of polymerization of the resin composing them present a shrinkage variable from a minimum of 4%, as in the case of very tough polyester fibers, to 50%, for example in the fibers of PVC or modified PVC.

This shrinkage or thermal retraction is useful as it consents a comfortable fitting of the double yarn on the shaping spindles, but involves some practical problems in the coupling of the small tubes which have retracted on said shaping spindles, inducing longitudinal stress on the multi-tubular sheaths.

Furthermore, the existence of this stress and the risk of a non-total retraction during the retraction phase, may involve a slow delayed retraction in the operations of electrochemical formation of the plates or in the lifespan of the batteries, with serious damage for their duration. These problems persist even when the processing of the sheaths with retractable fibres takes place with systems with spindle or with single floating spindle.

Also noted is the use of non-wovens, with structure similar to the fibreglass, but produced with stayle fibers for the production of small tubes.

The technology is extremely similar to that of the small tubes in fabric, with the essential variant that the double fabrix with parallel tubes is obtained by stitching or hot welding.

The non-wovens have a very uniform, very distributed porosity, with numerous labyrinths, for which in general, with equal weight of textile material, a greater filtration is obtained.

Multitubular sheaths obtained from double layers of fabrics stitched or welded, dressed and polymerized in furnace are described in English patents Nos. 1.551.798, 1.574.722 and 1.071.917.

However, the use of non-wovens presents some problems, e.g. resistance to internal pressure, the high quantity of resins (even up to 20% and over) which must be given to obtain good mechanical characteristics and the variation of tension and density of fibers, which induce retractions during thermoforming.

According to the present invention, all the above problems are solved using fabrics or non-wovens obtained from yarns, burrs or stayle fibers of polyester completely thermically retracted, and submitting the fabrics or non-wovens, in succession, to a treatment of air-conditioning or heating, of tempering or rapid cooling and calibration, and of slow cooling while each small tube of the fabric is inserted in a spindle or core with variable diameter in each zone of treatment and the smaller diameter at the zone in which heating or air-conditioning takes place.

Through the procedure of the present invention, before the entrance in the forming machine, the dimensions of each small tube are pre-established in equilibrium to the temperature used in forming. This treatment has given excellent results not only with normal fibers, but even more with non-wovens in stayle fibers or continuous burrs of polyester.

In the case of non-wovens, the retracted stayle fibers are dressed with minimum quantities ( 2 ÷ 5%) of a binding dressing (generally polyacrylic) as the solidity of the fiber or non-woven is already uniformly distributed and guaranteed by a well batched series (4÷9 per cm² ) of hot welds, obtained by local sintering of the compressed fibers heated to a temperature near melting point.

This eliminates the possibility of having in the non-woven thin layers of resin which block the pores. Moreover, small reserves of acid are created in the welds and a double layer obtained (after stitching or welding) which may exactly conform to the foreseen size of the small tubes, without immediate retractions and without retraction of unforeseen residues.

The thermic treatment and subsequent rapid tempering of the cold permit a completely dimensioned idle tube to be fitted on the calibrated spindle ant under the cooling plate.

According to the present invention, using double flattened fabrics, whose tubes or small tubes have inlet an identical development to that of the small stiffened circular or elliptic tubes in outlet, it is preferred that the first part of the spindle of retraction has a slightly smaller diameter than the final small tube, that the feed traction is exercised only in the joints or seams between one small tube and the other, and that the heating zone has only one wire of very small diameter for only horizontal support, to permit heating uniformity on the outside and inside perimeter and inside the fibers. Heating comes from radiators with infrared rays, already noted, whose radiations are frequently conditioned by temperature and which are selectively absorbed by the resins, making heating uniform and rapid also in the core of the yarn. In these conditions, after the heating zone, the small tube can be conducted to the cooling section, preferably to guarantee maximum slip, prevented from stretching on the same spindle by a water-cooled plate, in alloy of high heat capacity (aluminium alloy) and high conductivity. With this is blocked, with minimum tolerance and without tension, the form of the small tube. A subsequent stabilizing station makes the form more secure, lowering temperature to that of the environment, after which the sheath is cut with the usual systems of shears or hot wire.

The thermoforming procedure of the present invention can be better understood from the following detailed description in which reference is made to the attached drawings which illustrate a form of equipment not discriminating, but which forms an example of preferred construction, in which:

- fig. 1 shows the side schematic view of the basic parts of a thermoforming line applying the thermoforming procedure;

- fig. 2 shows the schematic view of a traction station before heating;

- fig. 3 shows the schematic view of the traction station after heating;

- fig. 4 shows the schematic view of a part of the cooling station;

- fig. 5 shows the schematic view of the thermoforming core from loading to discharge;

- fig. 6 shows the schematic view of the cross-section of the core indicated in fig. 5 in the fundamental points of the tube guide.

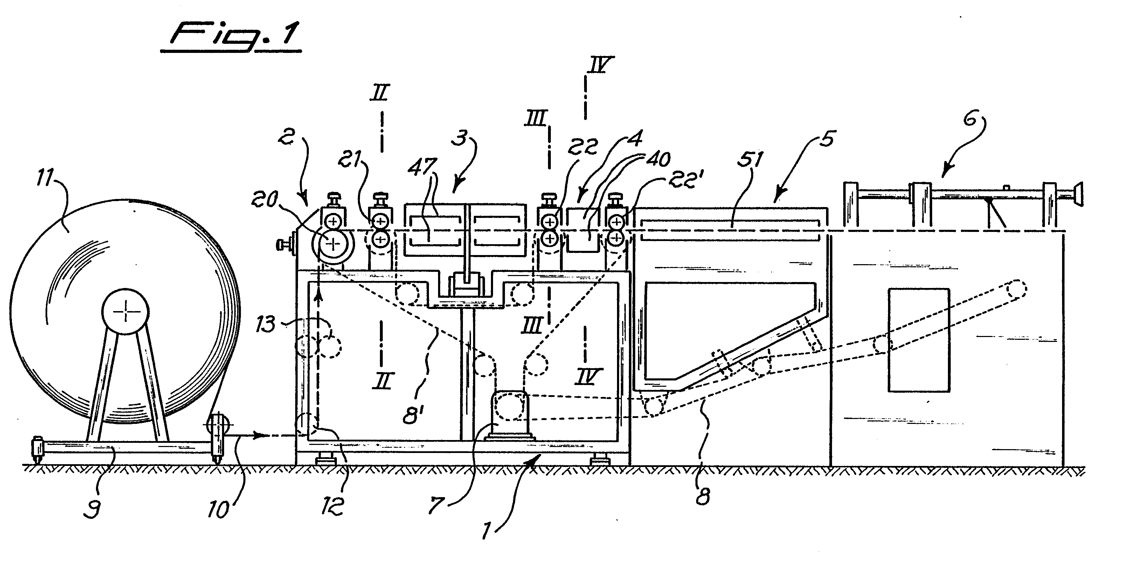

With reference to figure 1, the thermoforming procedure of the present invention is carried out in a fixed thermoforming machine 1, in which a sheath 10 is submitted to the basic processes of positioning and loading in area 2, of air-conditioning or heating in area 3, of tempering or rapid cooling and calibration in zone 4, of slow cooling in zone 5 and of cross-cutting to size in zone 6.

The first handling of the fabric to be thermoformed and then of the piece of sheath formed is obtained by a single drive reducer 7 by means of returns with pulleys, all driven by toothed belts 8-8', which guarantee the uniform speed of the various conveyor rollers installed in the various zones. The handling system is not described in detail, being of noted type.

The continuous, flat thermoforming belt 10 is fed to machine 1 by a transferable roller carriage 9, on which the coil 11 of the belt to be thermoformed can be rotated in idle position.

This belt 10 consists of a double fabric divided with flat tubes of constant width chosen in accordance with the circumference of the final tube and equal to about half of the latter.

The number of tubes corresponds to the number of small tubes that must be put on the plate, generally at least five and in particular 15, 19 or 21.

The fabric to be treated is made of organic fibers resistant to sulphuric acid, in particular in polyester resins, which have already undergone thermic retraction, preferably at temperatures of 150 - 180°C, better still 160°C, when a sufficient crystallization and stable beating up are obtained. With this preliminary treatment, we obtain the required condition of having a fabric with stable dimension in the following processings which bring the belt from environmental temperature to start of plastification temperature, necessary to induce the desired form, and from this temperature to environmental temperature and cooling to block the form without any supplementary retraction.

Not even during use of the batteries will the small tubes thus obtained undergo any of the feared slow retractions at the highest temperature of the formation cycle or during practical use.

Thanks to this pre-treatment, realizable according to known art, it is possible to have precise widths of tubes corresponding to the circumference or generally to the perimeter of the small tube.

This width is precisely obtained with particular ease using two superimposed pieces of non-wovens blocked at points and reciprocally stitched with a thread of the same retracted polyester.

This is preferred, but not indispensable, condition, as the tubes can also be produced by hot welding or directly by weaving, but with some greater technological difficulty and less precision.

Nevertheless, all the forms of manufacture of the tubes are compatible with the procedure of the present invention.

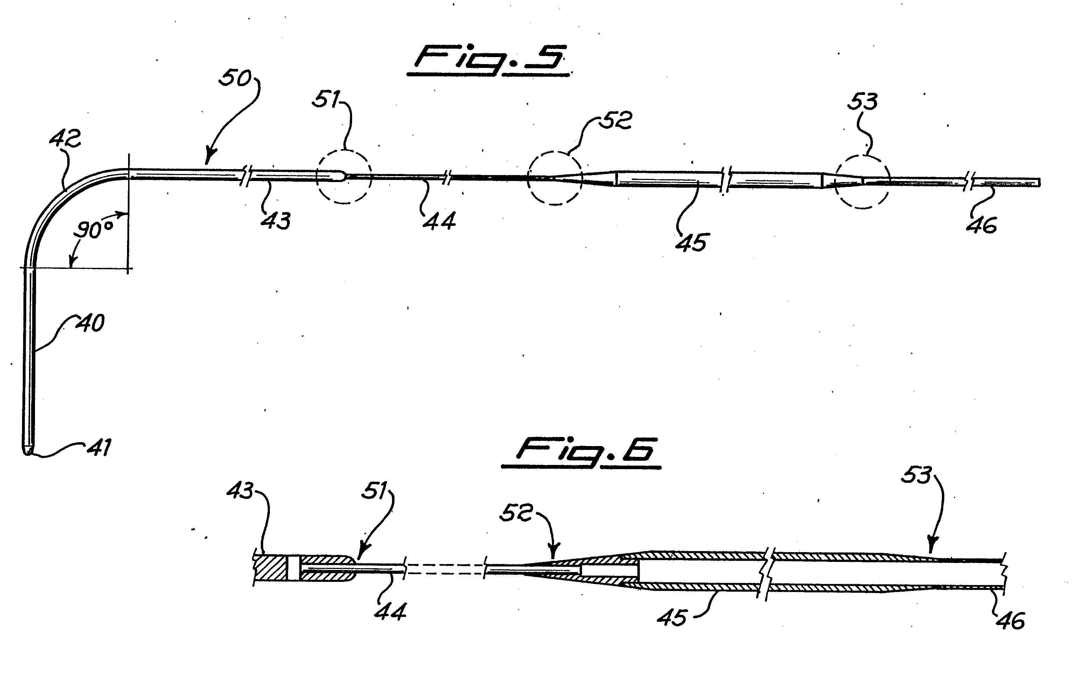

The multitubular belt 10 is fed to the thermoforming machine 1 from below through shaped rollers 12 and 13 equipped with ribs that bring the seams of the single tubes near one another. In this way, the inlet of each tube is open to receive the initial section of the continuous forming core 50 (see fig. 5), placed on the conveyor rollers of the various phases and zones.

At the start of zone 2, the forming core 50 presents, for each tube, a first vertical section 40 of slightly smaller diameter (up to 25%) than the final diameter of the tube formed (e.g. 7 mm compared with a final diameter of 8 mm), equipped with a conical bit 41 with spheric end, to prevent obstacles to fabric slip.

The first vertical section 40 is followed by a curved section 42, with constant radium for a 90° arc, and a straight horizontal section 43.

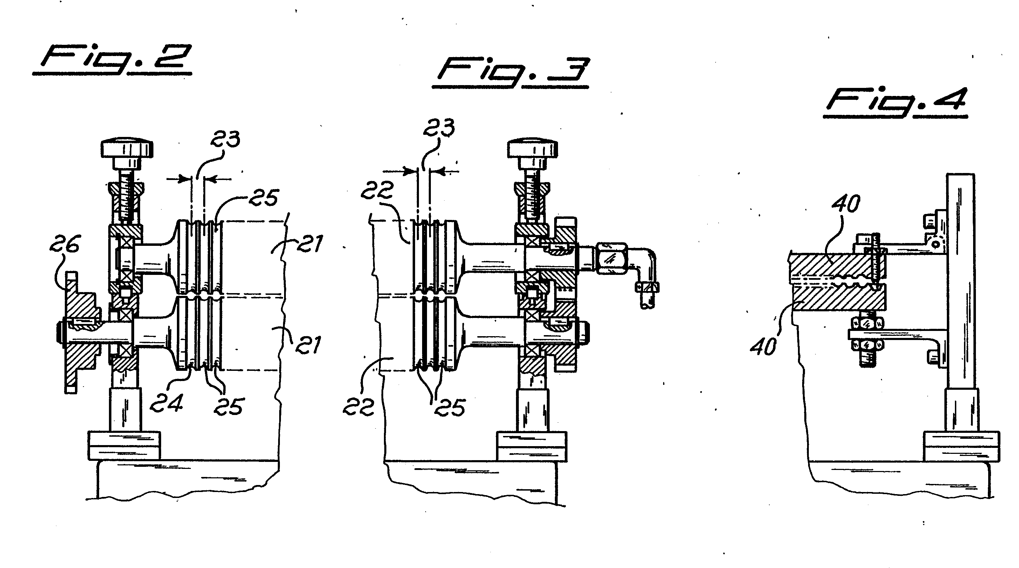

The curved section with constant radium 42 comes to rest on a pair of grooved rollers 20 and the horizontal section 43 on a pair of grooved rollers 21, shown in detail in fig. 2.

In this first part of the process, the core 50 can swing within the grooves 24 of said rollers to permit the gradual switch from the pitch of the fabric 10 with flat tubes to pitch 23 of the conveyor rollers 20 and 21 and all subsequent ones, pitch which corresponds to that required between the small tubes of the sheath.

The grooves 24 have preferably the circular form, but can also have the elliptic form, are of slightly smaller diameter than the outside diameter of each small finished tube and are flanked by a double set of circular beds 25, lightly knurled, placed on the two rollers spaced by about half the thickness of the double belt in stitching zone. The circular beds 25 exclusively feed the belt uniformly, one of the rollers 21 being conductor and conveyed at constant speed by the toothed pinion 26, conducted by the chain 84 and motor 7.

At the end of the horizontal section 43, positioning according to the pitch prescribed on the various grooves on each core is carried out and the procedure foresees that, keeping this pitch invariable, the form of the small tube can freely vary. For this purpose, in zone 3, the core 50 is provided with a section 44 of very small diameter (up to 25% of the final diameter, e.g. 2 mm on tube of 8 mm diameter).

As can be seen in detail in fig. 6, this section 44 is coupled to the preceding section 43 and the following section 45 by slip and fixing connections 51 and 52.

To the section with small diameter 44 corresponds zone 3 of thermic treatment of the machine 1, in which is prepared the heating device 47. Said heating device 47 is provided, on the top and bottom of a parallelepiped hollow, a set of ceramic elements radiating with infrared rays, which emit rays in the frequency corresponding to the temperature of 300 ÷ 330°C towards the belt, which slips round the section with small diameter 44 at a speed of 2-5 m/min., preferably 3 m/min. In this way the radiations are uniformly absorbed by the belt until a temperature is reached inside the fibers corresponding to that of start of plastification, i.e. 150 ÷ 180°C,and preferably, for terephthalic polyester fibers, of 160°C.

The tubes heated, guided and conveyed by the pairs of rollers 22 and 22', shown in detail in fig. 3, are carried on the gradually growing profile of the connection 52 of the core 50 then on the section 45 in which tempering, calibration and cooling take place. In this section, the core, hollow, to have the minimum thermic inertia, is lined with teflon to be non-adhesive and have the minimum slip friction, has an outside diameter that corresponds exactly to that required by the final tube, excepting light retractions of linear cooling. The rapid fall of the temperature, which blocks the forms thanks also to the solidification of the small quantities of dressing plastified by the previous heating, is obtained in zone 4 by means of plates with high heating capacity 40, constructed in light alloy and reproducing the profile of the sheaths, as shown in fig. 4. Said plates 40 are pressed together and presss with suitable clearance the walls of the sheath on the profile of section 45 of core 50.

They contain a circuit water-cooled at 1÷10°C, preferably at around 5°C.

Thanks to the high heating capacity and conductivity, heat is removed quickly and uniformly.

A blockage of the form and calibrating stretching is thus obtained, but still in softness phase, so that the tube slides on the tefloned core without practically any clearance on same. The section 45 is short, and, after a gradual reduction 5", the core 50 continues with a section 46 of slightly smaller diameter (about 90% of the diameter of the small final tube), continuing slow cooling up to environmental temperature, by means of a pair of plates 51, provided with grooves like those of the plates 40, maintain-and stabilizing the outside diameter and pitch of the sheath, always conducted only by the apex pull of the various grooves.

With this the sheath reaches the end of the section 46 of the core, and at the final cooling outlet 51 with the desired pitch among the various tubes, and with the desired diameter at each single small tube,without any transversal or longitudinal tension.

The final thermoforming stage is followed, according to known art, by the cutting to size in the stations 6, by guillotine or better still with a hot incandescent wire. The sheaths cut to size are sent to the packaging boxes.

The thermoforming procedure of the present invention has been described above with particular application to a particular arrangement of mechanical members, but can be carried out also on other arrangement noted to technicians of the sector.

Furthermore, the thermoforming procedure of the present invention can be applied to any form of tube: square, circular, elliptic or triangular.

## Claims

1) Thermoforming procedure of multitubular sheaths with at least five small tubes made in double fabric with parallel tubes stitched or woven, or in non-wovens blocked at points, obtained with yarns, burrs or stayle fibers in polyesters, by thermic treatment of the fabrics or non-wovens on fixed spindles, characterized by the fact that said fabrics or non-wovens are formed by yarns, burrs or stayle fibers of polyester, completely thermically retracted and are subseqeuntly submitted to air-conditioning or heating, tempering or rapid, calibrated cooling, and slow cooling, while each small tube of the fabric is inserted in a spindle or core of variable diameter in each zone of treatment, and the smallest diameter in the zone in which the heating or air-conditioning takes place.

2) Procedure according to claim 1, in which the spindle or core of variable diameter comprises a first section having a diameter about 25% smaller than the final diameter of the small tube, at the insertion zone; a second section having a diameter about 25% smaller than the final diameter of the small tube, at the heating zone; a third hollow section lined in teflon of equal diameter to the final tube, at the rapid cooling and calibrating zone; and a final section, at the slow cooling zone, having a diameter about 90% that of the final tube.

3) Procedure according to any one of the previous claims, in which the fibres or stayle fibers of polyester of the fabrics or non-wovens are retracted at a temperature between 150 and 180°C, preferably at 160°C.

4) Procedure according to any one of the previous claims, in which the air-conditioning or heating of the fabrics or non-wovens is carried out with stagnant air and under infrared rays, radiated by ceramic radiators at 300 ÷ 330°C, positioned at a distance from the fabrics slipping at speed of 2 ÷ 5 metres per minute.

5) Procedure according to any one of the previous claims, in which the rapid cooling or tempering is carried out by one or more pairs of light alloy plates, reproducing in negative the profile of the multitubular sheath, and provided on the inside with water cooling circuit from 1 to 10°C, preferably 5°C.

6) Procedure according to any one of the previous claims, in which the slow cooling is carried out by two plates at environmental temperature or lower, reproducing in negative the profile of the multitubular sheath, and superimposed to the small tubes fitted on the end section of each core of diameter about 90% that of the final small tube.

7) Procedure according to any of the previous claims, in which a non-woven is used, composed of thermically retracstayle · fiber polyester, dressed with 2-5% of a binder and containing 2-4 hot welds per cm².

8) Procedure according to any of the previous claims, in which the multitubular fabric to be treated is conveyed through the various zones of treatment at the joints or seams.

9) Procedure according to any of the previous claims, in which the fabric is double and split into flat tubes of constant width which is function of the circumference of the final tube.

10) Procedure according to any of the previous claims, in which the fabric consists of two non-wovens superimposed and blocked at points and stitched reciprocally with the same thermically retracted polyester thread.

Fig.1

0 275 897

_Fig.2_

_Fig.3_

_Fig.4_

_Fig.5_

_Fig.6_

0 275 897